# FASCICULE DE BREVET EUROPEEN

(11) **EP 0 956 682 B1**
(45) Date de publication et mention de la délivrance du brevet: **17.08.2005**
(21) Numéro de dépôt: 98904209.8
(22) Date de dépôt: 23.01.1998
(51) Int. Cl.: H04L 12/66, H04L 29/06

(54) **DISPOSITIF DE ROUTAGE GENERIQUE DE MESSAGES TRANSMIS DANS DES FORMATS ET SELON DES PROTOCOLES DIFFERENTS**
VORRICHTUNG ZUR ALLGEMEINEN LEITWEGLENKUNG VON NACHRICHTEN IN VERSCHIEDENEN FORMATEN UND UNTERSCHIENDLICHEN PROTOKOLLEN
DEVICE FOR GENERIC ROUTING OF MESSAGES IN DIFFERENT FORMATS AND ACCORDING TO DIFFERENT PROTOCOLS

(30) Priorité: 28.01.1997 FR 9700893
(43) Date de publication de la demande: 17.11.1999
(73) Titulaire: THALES AVIONICS S.A., 78141 Vélizy Villacoublay Cédex (FR)
(72) Inventeur: SANNINO, Christian, Thomson-CSF S.C.P.I, F-94117 Arcueil Cedex (FR); BAUJARD, Michel, Thomson-CSF S.C.P.I, F-94117 Arcueil Cedex (FR); SIMON, Georges, Henri, Thomson-CSF S.C.P.I, F-94117 Arcueil Cedex (FR)
(74) Mandataire: Beylot, Jacques
(86) Numéro de dépôt international: PCT/FR1998/000124
(87) Numéro de publication internationale: WO 1998/033305

(56) Documents cités:
- EP-A- 0 666 670
- WO-A-95/16318
- US-A- 5 339 318
- CHIUNG-SHIEN WU ET AL: "A DUAL BUS APPROACH FOR LAN INTERWORKING WITH ATM NETWORKS" COMPUTER COMMUNICATIONS REVIEW, vol. 25, no. 3, 1 juillet 1995, pages 66-85, XP000570762

## Description

La présente invention concerne un dispositif pour le routage de messages transmis dans des formats et selon des protocoles différents adaptés à plusieurs applications.

Elle s'applique notamment, mais non exclusivement aux systèmes de télécommunications aéronautiques qui sont amenés à transmettre des informations de natures très différentes et par des voies différentes. Ainsi, ces informations peuvent être de nature analogique, pour transmettre la voix dans les applications de téléphonie. Elles peuvent être également de nature numérique pour transmettre des fichiers et des données.
Ces informations se présentent aussi sous différents formats, comme ceux utilisés pour le contrôle aérien, la gestion de la flotte et des équipages des compagnies aériennes, ou encore comme les différents messages à usage administratif des compagnies et des communications des passagers.

A l'heure actuelle, ces informations sont traitées et transmises par des réseaux de communication distincts, avec des contraintes différentes. Ainsi, les messages de contrôle aérien doivent pouvoir être transmis avec une grande sécurité, ce qui implique des architectures redondantes. Les messages des passagers sont traités par des commutateurs téléphoniques et doivent être transmis en temps réel, tandis que les messages numériques de type fichier sont traités par des routeurs de données.

Chaque réseau de communication met en oeuvre des protocoles et des équipements spécifiques adaptés à la nature des données à transmettre et aux contraintes liées à ces dernières. Ainsi, la voix est traitée par des protocoles régis par ITU-T (International Telecommunications Union - Telecommunication Standards Section) et CEPT (Conférence Européenne des Postes et Télécommunications), tandis que les messages de contrôle aérien et de gestion de la flotte et des équipages des compagnies utilisent les protocoles ARINC.
Les télécommunications aéronautiques mettent donc en oeuvre de nombreux équipements différents qui alourdissent considérablement, en termes de coût et d'encombrement, l'électronique embarquée à bord des aéronefs.

Il s'avère que la multiplicité des équipements nécessaires à la transmission de ces informations s'oppose à leur intégration, et rend leur coût prohibitif, chaque type d'information à transmettre nécessitant des équipements spécifiques.
En outre, ces équipements ne présentent pas une architecture suffisamment ouverte et modulaire pour pouvoir s'adapter facilement aux nouvelles techniques de communication en constante évolution.

Par ailleurs, chaque type d'information à transmettre étant affectée à un réseau de communication spécifique, il n'est pas possible de transmettre une information par un réseau autre que celui auquel elle est affectée. Les systèmes actuels manquent donc de souplesse d'utilisation.

Pour réaliser un dispositif de routage permettant de transmettre des informations numériques de natures très différentes par des réseaux de transmission également de natures très variées, on peut songer à utiliser des noeuds de multiplexage mettant en oeuvre la technologie ATM (Asynchronous Transfert Mode en langage anglo-saxon) qui a été spécialement développée pour une transmission simultanée, sous forme numérique, de signaux de données, de parole et d'image et supporter les différents services nécessaires à une vidéoconférence. Cela nécessite la mise en oeuvre de deux noeuds de multiplexage ATM montés tête-bêche, l'un débouchant sur les différentes applications locales (application de téléphonie, application de contrôle aérien, application de gestion de vol pour un aéronef), l'autre débouchant sur les différents réseaux de communication dédiés à ces applications. Cependant, l'architecture actuelle des noeuds de multiplexage ATM, à base de modules de réseaux et de modules de service ou d'application interconnectés par des bus de données et de contrôle, telle qu'elle est connue et décrite, par exemple dans la demande internationale de brevet WO 95/16318 ne permet pas de conserver au niveau global du dispositif de routage les propriétés de modularité que l'on trouve au niveau de chaque noeud de multiplexage ATM. L'introduction de nouvelles applications ou les évolutions des réseaux de communications ne peuvent être prises en compte par le dispositif de routage sans nécessiter des modifications considérables des modules d'interface déjà en place. Ce manque de capacité d'évolution est un inconvénient important dans le domaine des télécommunications aéronautiques où l'on doit s'accommoder de la diversité des architectures avion et des desiderata des compagnies aériennes ainsi que de l'évolution rapide des réseaux de communications utilisés.

La présente invention a pour but de supprimer ces inconvénients. A cet effet, elle propose un dispositif pour le routage d'informations entre des réseaux de transmission et des systèmes de traitement, de différents types et utilisant différents formats de présentation des informations et différents protocoles de transmission, dont l'architecture présente une modularité optimisée permettant des ajouts et des retraits de fonctions sans effet sur les fonctions non concernées déjà en place.

Selon l'invention, ce dispositif est caractérisé en ce qu'il comprend :
- un module d'interface pour chaque type de réseau de transmission pour transformer le format des informations transmises par le réseau en un format prédéterminé, et réciproquement pour transformer le format prédéterminé dans le format utilisé par le réseau,
- un module d'interface pour chaque type de système, pour transformer le format des informations émises par le système dans le format prédéterminé, et réciproquement pour transformer le format prédéterminé dans le format de transmission d'informations utilisé par le système,
- autant de modules de conversion que de liaisons prévues entre les systèmes et les réseaux de communication pour adapter le protocole de transmission des informations à transmettre au système ou au réseau destinataire de ces informations, en fonction du réseau ou système émetteur de ces informations, et
- un bus de liaison assurant la transmission des informations dans le format prédéterminé entre les modules d'interface et les modules de conversion.

L'architecture du dispositif de routage ainsi définie est donc entièrement modulaire. De cette manière, l'invention permet de traiter n'importe quelle information provenant de n'importe quelle source pour l'envoyer vers n'importe quel destinataire. Il suffit pour cela de prévoir le module d'interface adapté au réseau de transmission ou au système que l'on souhaite ajouter, ainsi que les modules de conversion correspondants aux liaisons entre réseaux et systèmes envisagées.

Avantageusement, le dispositif selon l'invention comprend un module de commutation assurant la commutation en temps réel des informations à transmettre dans le format prédéterminé, entre les modules d'interfaces et les modules de conversion.

Ce dispositif offre une grande souplesse d'aiguillage des informations entre les systèmes et les réseaux avec des changements de protocoles fréquents, ce qui est particulièrement avantageux dans le cas où les systèmes sont mobiles, car embarqués par exemple à bord d'aéronefs.
Il offre également la possibilité d'aiguiller les informations vers des fonctions redondantes, en cas de défaillance, que cette défaillance concerne un réseau, un système ou le dispositif de routage qui peut être couplé à un autre dispositif de routage identique en redondance.

Selon une particularité de l'invention, les modules d'interface et les modules de conversion présentent une architecture analogue comprenant chacun un circuit d'interface identique avec le bus de liaison, et un processeur commandé par un programme adapté à la fonction du module, le module de commutation comprenant également ce circuit d'interface couplé à une matrice de commutation.

Selon une autre particularité de l'invention, le format prédéterminé est celui utilisé par la technique ATM (Asynchronous Transfer Mode) selon laquelle les informations à transmettre sont réparties en paquets ou cellules de longueur fixe prédéterminée, et sont transmises sous cette formes par multiplexage temporel et acheminées vers leurs destinataires respectifs par commutation.

Avantageusement, le dispositif selon l'invention présente une architecture totalement redondante comprenant deux dispositifs de routage interconnectés par un bus de liaison spécifique.

Un mode de réalisation du dispositif selon l'invention sera décrit ci-après, à titre d'exemple non limitatif, avec référence aux dessins annexés dans lesquels :
La figure 1 représente schématiquement l'architecture fonctionnelle du dispositif selon l'invention ;
La figure 2 représente le format prédéterminé de transfert des informations entre les modules du dispositif selon l'invention ;
Les figures 3 et 4 représentent schématiquement l'architecture matérielle et logicielle de deux variantes du dispositif selon l'invention ;
La figure 5 représente l'architecture logicielle d'un module d'interface avec un système ;
La figure 6 représente l'architecture logicielle d'un module d'interface avec un réseau ;
La figure 7 représente un module de conversion ; et
La figure 8 représente un autre module du dispositif montré sur la figure 1.

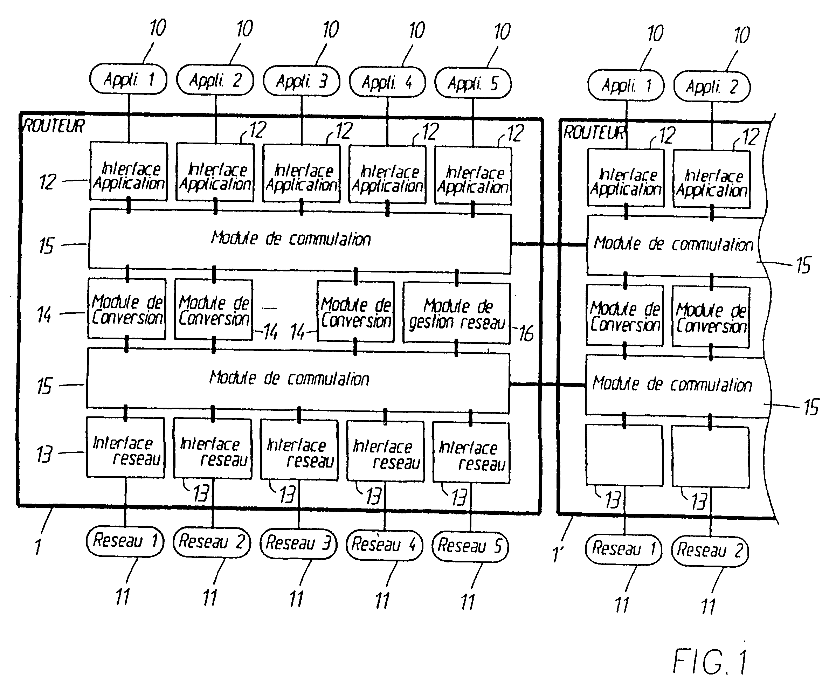

Sur la figure 1, le dispositif de routage 1 selon l'invention permet d'assurer l'interconnexion entre une pluralité de systèmes ou applications 10 et une pluralité de réseaux communication et de transmission de données 11.

Appliqué au équipements embarqués à bord d'un aéronef, les systèmes correspondent aux différents systèmes avioniques, comme par exemple le système de gestion de vol, le système de pilotage, et le système de téléphonie. Ces systèmes communiquent avec le sol par l'intermédiaire des réseaux de communication HF, VHF, par satellite et par radar secondaire de surveillance (liaison mode S).

A cet effet, le dispositif de routage 1 comprend autant de modules d'interface 12 avec un système que de systèmes 10 et autant de modules d'interface 13 avec un réseau que de réseaux 11. Il comprend également autant de modules de conversion 14 que de liaisons envisagées entre les systèmes 10 et les réseaux 11, ainsi qu'un module de commutation assurant l'acheminement des informations entre les modules d'interface 12 avec les systèmes, les modules de conversion 14 et les modules d'interface avec les réseaux 13, et un module de gestion 16 assurant différentes tâches générales de gestion du dispositif de routage 1.

Les modules d'interface 12 et 13 permettent de transformer le format des informations émises par le système ou le réseau dans un format prédéterminé, et réciproquement de transformer le format prédéterminé dans le format de transmission d'informations utilisé par le système ou le réseau.

Les modules de conversion 14 permettent d'adapter le protocole de transmission des informations à transmettre au système ou au réseau destinataire, en fonction du réseau ou système émetteur de ces informations.

Le module de gestion 16 regroupe les services habituellement associés à la gestion de réseau. Il s'agit de la gestion des fautes, des performances, de la configuration du dispositif de routage 1 pour demander l'établissement d'une liaison dans le cas d'une défaillance, de la gestion de la facturation qui est habituellement liée aux télécommunications téléphoniques, mais qui peut être étendue aux autres types de communications, et enfin de la gestion de la sécurité liée à la confidentialité et aux autorisations d'accès aux informations.

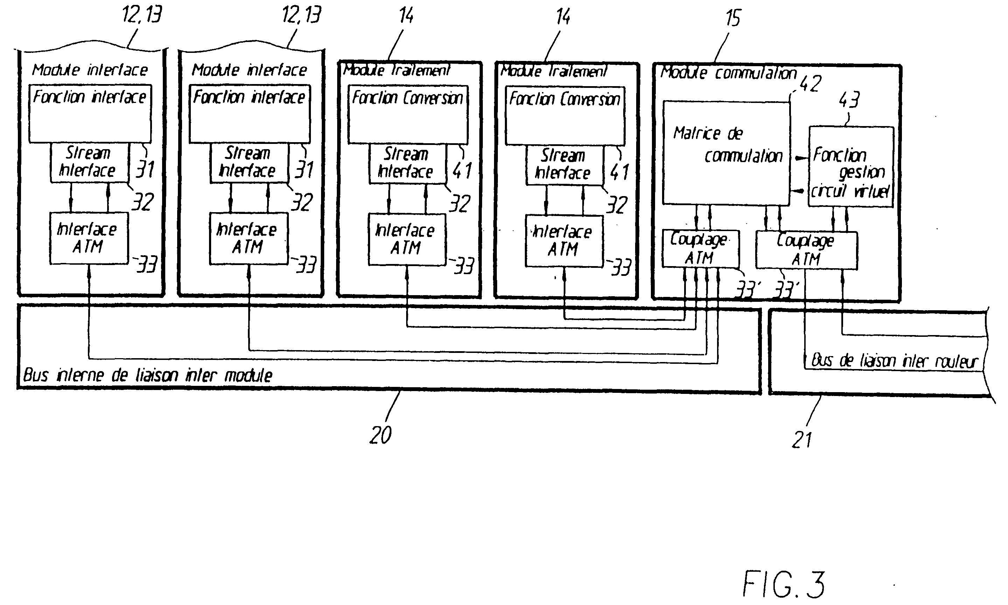

Selon l'invention, le format prédéterminé utilisé est celui préconisé par la technique ATM qui permet de traiter, et en particulier, commuter en temps réel indifféremment voix et données, et qui permet de traiter des communications à des débits constants ou aléatoires, et ce de manière indépendante du protocole de communication utilisé.
La technique ATM est basée la transmission des informations sous la forme de paquets ou cellule de petite taille fixe, par exemple 53 octets, munis d'un en-tête 51 de 5 octets rassemblant des données de contrôle, d'identification, et d'acheminement de l'information, et d'un champ 52 de 48 octets réservé aux informations à transmettre (figure 2). Plus précisément, chaque en-tête de cellule comprend un numéro de voie logique sur 24 bits qui peut être modifié à chaque opération de commutation, et un champ de contrôle 55 de 16 bits. Ce numéro de voie logique comprend deux identificateurs complémentaires, à savoir un identificateur de circuit logique 53 sur 8 bits et un identificateur de voie logique 54 sur 16 bits à l'intérieur d'un circuit logique.

Tel que représenté sur la figure 3, les modules d'interface 12, 13 du dispositif de routage 1 comprennent une fonction d'interface 31 qui réalise la connexion avec le réseau ou le système et qui communique par l'intermédiaire d'un mécanisme de files d'attentes 32 avec un module d'interface ATM 33.

Ce module d'interface ATM est connecté à un bus interne 20 de liaison entre les modules 12, 13, 14, et fournit dans le sens émission un service de segmentation qui consiste à répartir les informations à transmettre dans des cellules associées chacune à un en-tête selon la technique ATM, et dans le sens réception, un service de réassemblage qui consiste à sélectionner les cellules à recevoir et à reconstituer les informations transmises à partir des cellules reçues. Il fournit en outre des mécanismes d'adaptation destinés à répondre aux contraintes de format, de synchronisation, et de traitement des erreurs, propres à la technique ATM.

Selon la variante d'exécution représentée sur la figure 3, le bus interne de liaison inter-modules 20 présente une architecture en étoile, reliant chaque module d'interface 12, 13 et chaque module de conversion 14 au module de commutation 15 par une liaison respective bidirectionnelle.

Les modules de conversion 14 sont construits sur le même modèle que les modules d'interface. Ainsi, ils comprennent une fonction de conversion 41 assurant la conversion de protocole recherchée, cette fonction communiquant avec un module d'interface ATM 33 par l'intermédiaire d'un mécanisme de files d'attente 32, le module d'interface ATM 33 étant connecté au bus de liaison 20.

Le module de commutation 15 assure le routage et la commutation des cellules entre les différents modules d'interface 12, 13, et les modules de conversion 14 via le bus interne de liaison 20. A cet effet, il comprend une matrice de commutation 42 qui peut être réalisée par un circuit spécifique de type ASIC pour assurer une grande rapidité de commutation des cellules. La matrice de commutation 42 est connectée au bus interne de liaison 20 par l'intermédiaire d'un module de couplage ATM 33'.
Ce module de commutation inclue également une fonction de gestion de circuit virtuel 43 qui commande la matrice de commutation 42 pour allouer de façon statique ou dynamique chaque entrée/sortie de module d'interface 12, 13 avec chaque module de conversion 14. Cette fonction permet ainsi d'établir, grâce à un numéro de circuit virtuel, une connexion point à point entre un flux d'informations provenant ou à destination d'un système 10, un module de conversion 14, et un flux d'informations à émettre ou transmises par un réseau 11.

D'une manière connue, la matrice de commutation effectue l'analyse du numéro de voie logique figurant dans l'en-tête de chaque cellule pour aiguiller celle-ci vers le module d'interface ATM 33' en direction de la liaison bidirectionnelle adéquate du bus interne de liaison 20.

Il est à noter que, contrairement aux modules d'interface ATM 33 des autres modules 12, 13, 14, 16, le module de couplage ATM 33' du module de commutation 15 n'a pas besoin d'effectuer une segmentation de messages en cellules et réciproquement un assemblage des cellules pour reconstituer le message d'origine. Il présente donc une structure simplifiée par rapport aux modules d'interface ATM 33.

Par ailleurs, tel que représenté sur les figures 1, 3 et 4, le dispositif de routage 1 selon l'invention comprend des moyens pour se connecter à un autre dispositif de routage l'identique la liaison entre les deux dispositifs étant réalisée entre les modules de commutation 15 des deux dispositifs, de manière à réaliser une seule fonction de commutation.

Cette disposition permet d'interconnecter plusieurs dispositifs de routage distants ou de réaliser une architecture redondante, les dispositifs de routage 1, 1' étant alors connectés aux mêmes systèmes 10 et aux même réseaux 11, ou à leurs systèmes et réseaux redondants respectifs.

Pour interconnecter les modules de commutation 15 de deux dispositifs de routage identiques 1, 1', le module de commutation 15 comprend en outre un second module de couplage ATM 33' connecté d'un côté à la matrice de commutation 42 et de l'autre à un bus de liaison externe 21 relié à l'autre ou aux autres dispositifs de routage 1'.

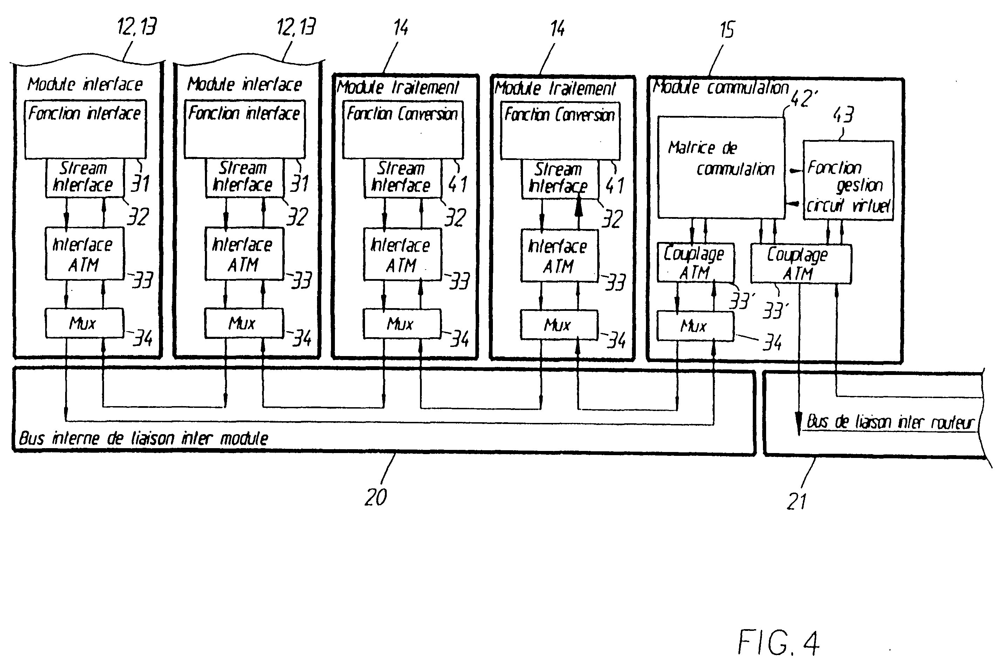

Dans la variante d'exécution du dispositif selon l'invention représentée sur la figure 4, la matrice de commutation proprement dite est répartie dans les différents modules connectés au bus interne de liaison inter-modules 20, ce dernier présentant une architecture en boucle dans laquelle le module de commutation 15 constitue un maillon au même titre que les autres modules 12, 13, 14 du dispositif de routage 1.

Dans cette variante, les modules d'interface ATM 33 des modules 12, 13, 14 sont reliés au bus interne 20, par l'intermédiaire d'un multiplexeur 34 conçu pour insérer dans le flux de cellules circulant sur le bus 20 les cellules construites par le module d'interface ATM 33 à partir des informations à émettre, et pour transmettre au module d'interface ATM 33 toutes les cellules détectées sur le bus interne 20 associées à un numéro de canal virtuel attendu par le module 12, 13, 14.

Par ailleurs, la matrice de commutation 42' se trouve simplifiée par rapport à celle 42 de la variante représentée sur la figure 3 puisqu'elle n'assure que le renvoi sur le bus interne 20 des cellules destinées à un module du dispositif de routage 1, et sur le bus externe 21 des cellules destinées à un autre dispositif de routage 1'.

On peut prévoir une solution intermédiaire entre les deux variantes représentées sur les figures 3 et 4 en associant à chaque module 12, 13, 14, et au bus externe 21 un numéro de canal virtuel propre, la matrice de commutation 42' assurant la commutation entre les canaux virtuels, en modifiant le numéro de canal virtuel dans l'entête de chaque cellule en fonction du module destinataire de la cellule.

Le dispositif de routage selon l'invention peut avantageusement être réalisé à l'aide d'une baie électronique comportant un bus interne dit "fond de panier" correspondant au bus de liaison 20, un module de commutation 15 comportant une matrice de commutation et autant de cartes insérées dans la baie que de modules d'interface 12, 13 et de modules de conversion 14.

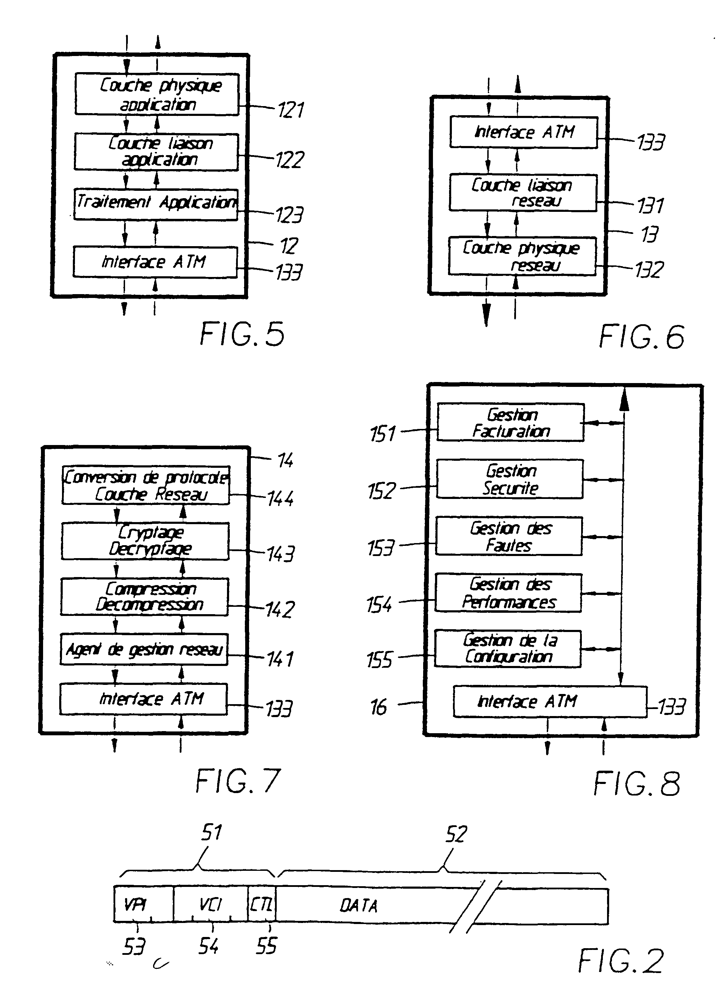

Plus précisément, sur la figure 5, chaque module d'interface avec un système comprend une couche physique d'interface 121 avec le système ou l'application, connectée directement au système 10, une couche de liaison 122 avec l'application, une fonction de traitement 123 spécifique de l'application et une fonction d'interface ATM 133 connectée au bus de liaison interne 20.

Sur la figure 6, chaque module d'interface 13 avec un réseau 11 comprend une fonction d'interface ATM 133 connectée au bus interne de liaison 20, une couche de liaison 131 avec le réseau et une couche physique 132 connectée directement au réseau 10.

Sur la figure 7, chaque module de conversion 14 comprend une fonction d'interface ATM 133 connectée au bus interne de liaison 20, une fonction de gestion de réseau 141 chargée de dialoguer avec le module de gestion de réseau 16, une fonction de compression et de décompression 142 de données permettant de réduire le débit nécessaire pour la transmission des données, une fonction de cryptage et de décryptage 143 de données, et la fonction de conversion de protocole 144 correspondant à la couche réseau.
La fonction de compression / décompression de données est parfaitement adaptée à la transmission d'images qui nécessite un débit de transmission important.

Sur la figure 8, le module de gestion de réseau 16 comprend : une fonction d'interface ATM 133 à laquelle sont connectées :
- une fonction de gestion de la facturation 151 qui gère les aspects financiers liés habituellement aux télécommunications téléphoniques, et qui grâce au dispositif selon l'invention peuvent être étendus aux autres réseaux de télécommunications,
- une fonction de gestion de la sécurité 152 qui gère les aspects liés à la confidentialité et aux autorisations d'accès aux informations,
- une fonction de gestion des fautes 153 qui est chargée de dialoguer avec les systèmes de maintenance,
- une fonction de gestion des performances 154 qui est chargée de dialoguer avec les fonctions de gestion du réseau global au niveau de l'aéronef, ainsi qu'avec les fonctions de gestion de réseau 141 des modules de conversion 14, et
- une fonction de gestion de la configuration 155 qui gère les canaux virtuels lorsque la demande de connexion est due à une défaillance et non à un besoin de communication en tant que tel.

## Revendications

1. Dispositif pour le routage d'informations entre des réseaux de transmission et des systèmes de traitement, de différents types et utilisant différents formats de présentation des informations et différents protocoles de transmission,
**caractérisé en ce qu'**il comprend :
- un module d'interface (13) pour chaque type de réseau de transmission (11) pour transformer le format des informations transmises par le réseau en un format prédéterminé, et réciproquement pour transformer le format prédéterminé dans le format utilisé par le réseau,
- un module d'interface (12) pour chaque type de système (10), pour transformer le format des informations émises par le système dans le format prédéterminé, et réciproquement pour transformer le format prédéterminé dans le format de transmission d'informations utilisé par le système,
- autant de modules de conversion (14) que de liaisons prévues entre les systèmes (10) et les réseaux (11) de transmission pour adapter le protocole de transmission des informations à transmettre au système ou au réseau destinataire de ces informations, en fonction du réseau ou système émetteur de ces informations, et
- un bus de liaison (20) assurant la transmission des informations dans le format prédéterminé entre les modules d'interface (12, 13) et les modules de conversion (14).

2. Dispositif selon la revendication 1,
**caractérisé en ce que** les modules d'interface (12, 13) et les modules de conversion (14) présentent une architecture analogue comprenant chacun un circuit d'interface (33) identique avec le bus de liaison (20), et un processeur (31, 41) commandé par un programme adapté à la fonction du module.

3. Dispositif selon la revendication 1 ou 2,
**caractérisé en ce que** le format prédéterminé est celui utilisé par la technique ATM (Asynchronous Transfer Mode) selon laquelle les informations à transmettre sont réparties en cellules de longueur fixe prédéterminée, et sont transmises sous cette formes par multiplexage temporel et acheminées vers leurs destinataires respectifs par commutation.

4. Dispositif selon l'une des revendications précédentes,
**caractérisé en ce qu'**il présente une architecture totalement redondante comprenant au moins deux ensembles (1, 1') de modules d'interface (12, 13) et de conversion (14) interconnectés par un bus interne (20), ces deux ensembles étant interconnectés par un bus externe (21) de liaison spécifique.

5. Dispositif selon la revendication 4,
**caractérisé en ce que** les deux ensembles comprennent chacun un module de commutation (15) assurant la commutation en temps réel des informations à transmettre à la fois entre les modules (12, 13, 14) à l'intérieur de chaque ensemble, et entre les deux ensembles.

6. Dispositif selon l'une des revendications 1 à 4,
**caractérisé en ce qu'**il comprend en outre un module de commutation (15) assurant la commutation en temps réel des informations à transmettre dans le format prédéterminé, entre les modules d'interface (12, 13) et les modules de conversion (14).

7. Dispositif selon la revendication 5,
**caractérisé en ce que** le bus interne de liaison inter-modules (20) présente une architecture en étoile, reliant chaque module d'interface (12, 13) et chaque module de conversion (14) au module de commutation (15) par une liaison respective bidirectionnelle.

8. Dispositif selon l'une des revendications 1 à 4,
**caractérisé en ce que** les modules d'interface (12, 13) et les modules de conversion (14) sont interconnectés en boucle, chaque module assurant la transmission des informations qui ne lui sont pas destinées au module suivant dans la boucle.

9. Dispositif selon la revendication 7,
**caractérisé en ce que** chaque module d'interface (12, 13) et chaque module de conversion (14) comprend un multiplexeur (34) conçu pour transmettre sur le bus interne (20) les informations à émettre, et pour prélever sur le bus interne (20) les informations associées à un numéro d'identification attendu par le module (12, 13, 14).

10. Dispositif selon l'une des revendications 7 ou 8,
**caractérisé en ce que** chaque liaison de transmission entre les modules d'interface (12, 13) et les modules de conversion (14) est identifiée par un numéro de canal virtuel, le dispositif comprenant en outre un module de commutation (15) assurant la commutation des informations entre ces canaux virtuels.

## Patentansprüche

1. Vorrichtung zur Leitweglenkung von Informationen zwischen Übertragungsnetzen und Verarbeitungssystemen, von unterschiedlichen Arten und unter Verwendung verschiedener Darstellungsformate der Informationen und unterschiedlicher Übertragungsprotokolle,
**dadurch gekennzeichnet, dass** sie aufweist:
- einen Schnittstellenmodul (13) für jede Art von Übertragungsnetz (11), um das Format der vom Netz übertragenen Informationen in ein vorbestimmtes Format umzuwandeln, und umgekehrt, um das vorbestimmte Format in das vom Netz verwendete Format umzuwandeln,
- einen Schnittstellenmodul (12) für jeden Systemtyp (10), um das Format der vom System gesendeten Informationen in das vorbestimmte Format umzuwandeln, und umgekehrt, um das vorbestimmte Format in das vom System verwendete Format zur Übertragung von Informationen umzuwandeln,
- ebenso viele Konvertierungsmodule (14) wie Verbindungen zwischen den Systemen (10) und den Übertragungsnetzen (11) vorgesehen sind, um das Übertragungsprotokoll der an das System oder an das Netz, für das diese Informationen bestimmt sind, zu übertragenden Informationen, in Abhängigkeit vom diese Informationen sendenden Netz oder System anzupassen, und
- einen Verbindungsbus (20), der die Übertragung der Informationen im vorbestimmten Format zwischen den Schnittstellenmodulen (12, 13) und den Konvertierungsmodulen (14) gewährleistet.

2. Vorrichtung nach Anspruch 1, **dadurch gekennzeichnet, dass** die Schnittstellenmodule (12, 13) und die Konvertierungsmodule (14) eine analoge Architektur besitzen, die je eine gleiche Schnittstellenschaltung (33) mit dem Verbindungsbus (20) und einen Prozessor (31, 41) aufweisen, der von einem an die Funktion des Moduls angepassten Programm gesteuert wird.

3. Vorrichtung nach Anspruch 1 oder 2, **dadurch gekennzeichnet, dass** das vorbestimmte Format das von der ATM-Technik (Asynchronous Transfer Mode) verwendete Format ist, gemäß der die zu übertragenden Informationen in Zellen vorbestimmter fester Länge verteilt sind und in dieser Form durch Zeitmultiplex übertragen und durch Umschaltung zu ihren jeweiligen Zieladressen geleitet werden.

4. Vorrichtung nach einem der vorhergehenden Ansprüche, **dadurch gekennzeichnet, dass** sie eine vollständig redundante Architektur aufweist, die mindestens zwei Einheiten (1, 1') von über einen internen Bus (20) miteinander verbundenen Schnittstellenmodulen (12, 13) und Konvertierungsmodulen (14) aufweist, wobei diese beiden Einheiten über einem externen spezifischen Verbindungsbus (21) miteinander verbunden werden.

5. Vorrichtung nach Anspruch 4, **dadurch gekennzeichnet, dass** die beiden Einheiten je einen Umschaltmodul (15) aufweisen, der die Echtzeitumschaltung der zu übertragenden Informationen sowohl zwischen den Modulen (12, 13, 14) innerhalb jeder Einheit als auch zwischen den beiden Einheiten gewährleistet.

6. Vorrichtung nach einem der Ansprüche 1 bis 4, **dadurch gekennzeichnet, dass** sie außerdem einen Umschaltmodul (15) aufweist, der die Echtzeitumschaltung der im vorbestimmten Format zu übertragenden Informationen zwischen den Schnittstellenmodulen (12, 13) und den Konvertierungsmodulen (14) gewährleistet.

7. Vorrichtung nach Anspruch 5, **dadurch gekennzeichnet, dass** der interne Bus (20) zur Verbindung der Module eine sternförmige Architektur aufweist, die jeden Schnittstellenmodul (12, 13) und jeden Konvertierungsmodul (14) über eine jeweilige bidirektionale Verbindung mit dem Umschaltmodul (15) verbindet.

8. Vorrichtung nach einem der Ansprüche 1 bis 4, **dadurch gekennzeichnet, dass** die Schnittstellenmodule (12, 13) und die Konvertierungsmodule (14) schleifenförmig verbunden sind, wobei jeder Modul die Übertragung der Informationen, die nicht für ihn bestimmt sind, an den folgenden Modul in der Schleife gewährleistet.

9. Vorrichtung nach Anspruch 7, **dadurch gekennzeichnet, dass** jeder Schnittstellenmodul (12, 13) und jeder Konvertierungsmodul (14) einen Multiplexer (34) aufweist, der so gestaltet ist, dass er auf dem internen Bus (20) die auszusendenden Informationen überträgt und vom internen Bus (20) die Informationen entnimmt, die einer vom Modul (12, 13, 14) erwarteten Identifikationsnummer entsprechen.

10. Vorrichtung nach einem der Ansprüche 7 oder 8, **dadurch gekennzeichnet, dass** jede Übertragungsverbindung zwischen den Schnittstellenmodulen (12, 13) und den Konvertierungsmodulen (14) durch eine virtuelle Kanalnummer identifiziert wird, wobei die Vorrichtung außerdem einen Umschaltmodul (15) aufweist, der die Umschaltung der Informationen zwischen diesen virtuellen Kanälen gewährleistet.

## Claims

1. Device for routing information between transmission networks and processing systems, of different types and using different information presentation formats and different transmission protocols,
**characterized in that** it comprises:
- an interface module (13) for each type of transmission network (11) for converting the format of the information transmitted by the network into a predetermined format, and vice versa for converting the predetermined format into the format used by the network,
- an interface module (12) for each type of system (10), for converting the format of the information output by the system into the predetermined format, and vice versa for converting the predetermined format into the information transmission format used by the system,
- as many conversion modules (14) as there are links between the systems (10) and the transmission networks (11) for adapting the transmission protocol of the information to be transmitted to the destination system or network for this information, as a function of the network or system outputting this information, and
- a link bus (20) ensuring the transmission of the information in the predetermined format between the interface modules (12, 13) and the conversion modules (14) .

2. Device according to Claim 1,
**characterized in that** the interface modules (12, 13) and the conversion modules (14) have a similar architecture, each comprising an interface circuit (33) which is identical to the link bus (20), and a processor (31, 41) controlled by a program adapted to the function of the module.

3. Device according to Claim 1 or 2,
**characterized in that** the predetermined format is the one used by the ATM (Asynchronous Transfer Mode) technique according to which the information to be transmitted is distributed into cells of predetermined fixed length, and is transmitted in this form by time multiplexing and is conveyed to its respective destinations by switching.

4. Device according to one of the preceding claims,
**characterized in that** it has a totally redundant architecture comprising at least two sets (1, 1') of interface (12, 13) and conversion (14) modules interconnected by an internal bus (20), these two sets being interconnected by a specific external link bus (21) .

5. Device according to Claim 4,
**characterized in that** the two sets each comprise a switching module (15) ensuring the real-time switching of the information to be transmitted both between the modules (12, 13, 14) inside each set, and between the two sets.

6. Device according to one of Claims 1 to 4,
**characterized in that** it furthermore comprises a switching module (15) ensuring the real-time switching of the information to be transmitted in the predetermined format, between the interface modules (12, 13) and the conversion modules (14).

7. Device according to Claim 5,
**characterized in that** the inter-module internal link bus (20) has a star architecture, linking each interface module (12, 13) and each conversion module (14) to the switching module (15) by a bidirectional respective link.

8. Device according to one of Claims 1 to 4,
**characterized in that** the interface modules (12, 13) and the conversion modules (14) are interconnected in a loop, each module ensuring the transmission of information which is not intended for it to the next module in the loop.

9. Device according to Claim 7,
**characterized in that** each interface module (12, 13) and each conversion module (14) comprises a multiplexer (34) designed to transmit over the internal bus (20) the information to be output, and to tap off from the internal bus (20) the information associated with an identification number expected by the module (12, 13, 14).

10. Device according to one of Claims 7 or 8,
**characterized in that** each transmission link between the interface modules (12, 13) and the conversion modules (14) is identified by a virtual channel number, the device furthermore comprising a switching module (15) ensuring the switching of the information between these virtual channels.
